# EUROPEAN PATENT APPLICATION

(11) **EP 1 571 587 A2**
(43) Date of publication of application: **07.09.2005**
(21) Application number: 05251172.2
(22) Date of filing: 28.02.2005
(51) Int. Cl.: G06K 9/20, G06K 9/32

(54) **Method and apparatus for utilizing a scannable URL (universal resource locator)**

(30) Priority: 29.02.2004 US 549068 P
(71) Applicant: OmniVision Technologies, Inc., California 95136 (US)
(72) Inventor: Rosdahl, Per, San Francisco, California 94123 (US)
(74) Representative: Hackney, Nigel John

(57) **Abstract**

A method and apparatus for utilizing a scannable URL (Universal Resource Locator) is described and illustrated. The invention, in one embodiment is a method of using a URL (Universal Resource Locator). The method includes capturing text as a digital representation. The method also includes determining what characters are included in the digital representation. The characters form the URL. The method further includes providing the URL for use in accessing a webpage.

## Description

This application claims the benefit of U.S. Provisional Application No. 60/549,068, filed February 29, 2004, which is incorporated herein by reference.

The present invention relates generally to digital image capture and more specifically to digital scanning and character recognition of URLs (Universal Resource Locators).

Users of technical equipment may encounter visually perceptible representation of website addresses, typically in the form of URLs (Universal Resource Locators). These URLs may be printed on paper or other media. Transcribing a URL, particularly a long one or a URL written in something other than the users' native language may result in transcription mistakes. URLs may be generated as a string of characters which are easy for a computer to manipulate but difficult for a person to use.

Cameras using digital technology in various ways are relatively well-known.
They have commercially available resolutions approaching 6.0 or more Megapixels, allowing for high resolution capture of images in a digital representation. Such cameras have been advanced to the point where they can be incorporated into cellular telephones, personal digital assistants, and other personal devices. Typically, the camers utilize CMOS or charge-coupled-devices to create a digital representation of an image which may then be manipulated by processors as digital data.

Processors may also be used to access data over the World Wide Web (WWW), typically through use of a communications interface, such as a network interface or a modem. Processors may request data by submitting a request through the communications interface to the World Wide Web. Typically, the request includes a URL (Universal Resource Locators). This request and any other communications with the World Wide Web may go through various intermediate machines to eventually reach a web server connected to or coupled to the World Wide Web. The processor may then receive a response from the World Wide Web in the form of data representing a website associated with the URL. Typically, the processor may then render the web page on a display. Alternatively, the processor may pass the web page data or a transformed version of the web page data to a display subsystem which may then render the web page on the display.

Additionally, algorithms for optical character recognition exist. Optical character recognition typically involves using a digital representation of an image and extracting characters from the image by determining what characters the bits or other storage units of the digital image represent. The resulting characters are also stored as a character digital representation, which may be manipulated by a processor as text rather than as an image.

Thus, it may be useful to bring these various technologies to bear on the problem of accessing a web page based on a printed or otherwise visually perceptible URL.

### SUMMARY

The present invention is described and illustrated in conjunction with systems, apparatuses and methods of varying scope. In addition to the aspects of the present invention described in this summary, further aspects of the invention will become apparent by reference to the drawings and by reading the detailed description that follows.

A method and apparatus for utilizing a scannable URL (Universal Resource Locator) is described and illustrated. The method and apparatus, in some embodiments, may be implemented using a cellular telephone or similar device to capture the URL in a digital representation, translate or extract text from the digital representation, and access a website addressable by the URL. The method may be implemented in various embodiments with a single device or with multiple devices (such as a cellular telephone and associated computer for example). Similarly, the apparatus may be embodied as a single device or multiple associated devices, such as a camera and an associated computer for example.

The invention, in one embodiment is a method of using a URL. The method includes capturing text as a digital representation. The method also includes determining what characters are included in the digital representation. The characters form the URL. The method further includes providing the URL for use in accessing a webpage.

The invention, in an alternate embodiment, is an apparatus for capturing and using a URL. The apparatus includes a digital image capture component. The apparatus further includes a communications interface component coupled to the digital interface component. The apparatus also includes a display coupled to the communications interface component.

The invention, in another alternate embodiment, is a method of using a URL. The method includes capturing text as a digital representation. The method also includes providing the digital representation to an upstream processor. The method further includes receiving webpage data.

The invention, in yet another alternate embodiment, is a cellular telephone for capturing and using a URL. The cellular telephone includes a digital image capture component. The cellular telephone also includes a communications interface component coupled to the digital interface component. Moreover, the cellular telephone includes a display coupled to the communications interface component. Furthermore, the cellular telephone includes a controller coupled to the digital image capture component, the communications interface component and the display. Additionally, the cellular telephone includes a web rendering component coupled to the display and coupled to the communications interface component.

The invention, in still another alternate embodiment, is a method of capturing and using a URL on a personal device. The method includes capturing text on the personal device as a digital representation. The method further includes determining on the personal device what characters are included in the digital representation, the characters forming the URL. The method also includes providing the URL for use in accessing a webpage.

The invention, in another alternate embodiment, is an apparatus for using a URL. The apparatus includes means for capturing text as a digital representation. The apparatus further includes means for determining what characters are included in the digital representation, with the characters forming the URL. The apparatus also includes means for providing the URL for use in accessing a webpage.

The present invention is exemplified in the various embodiments described, and is limited in spirit and scope only by the appended claims.

### BRIEF DESCRIPTION OF THE DRAWINGS

The present invention is illustrated in various exemplary embodiments and is limited in spirit and scope only by the appended claims.
Fig. 1 illustrates an embodiment of a process of using a written URL.
Fig. 2 illustrates an embodiment of a system which may be used in conjunction with a written URL.
Fig. 3A illustrates an exemplary printed URL and accompanying text.
Fig. 3B illustrates an exemplary printed URL and accompanying text with the URL highlighted.
Fig. 3C illustrates an exemplary printed URL as scanned.
Fig. 3D illustrates an exemplary printed URL undergoing OCR.
Fig. 3E illustrates an exemplary website corresponding to the exemplary printed URL.
Fig. 4 illustrates an alternate embodiment of a process of using a written URL.
Fig. 5A illustrates an exemplary printed URL and accompanying text.
Fig. 5B illustrates an exemplary printed URL and accompanying text as scanned.
Fig. 5C illustrates an exemplary printed URL and accompanying text with the URL highlighted.
Fig. 5D illustrates an exemplary printed URL undergoing OCR.
Fig. 5E illustrates a monetizing module related to use of a URL.
Fig. 5F illustrates an exemplary website corresponding to the exemplary printed URL.
Fig. 6 illustrates an alternate embodiment of a system which may be used in conjunction with a written URL.
Fig. 7 illustrates yet another alternate embodiment of a system which may be used in conjunction with a written URL.
Fig. 8 illustrates still another alternate embodiment of a system which may be used in conjunction with a written URL.

### DETAILED DESCRIPTION

The present invention is described and illustrated in conjunction with systems, apparatuses and methods of varying scope. In addition to the aspects of the present invention described in this summary, further aspects of the invention will become apparent by reference to the drawings and by reading the detailed description that follows.

A method and apparatus for utilizing a scannable URL is described. The method and apparatus, in some embodiments, may be implemented using a cellular telephone or similar device to capture the URL in a digital representation, translate or extract text from the digital representation, and access a website addressable by the URL. The method may be implemented in various embodiments with a single device or with multiple devices (such as a cellular telephone and associated computer for example). Similarly, the apparatus may be embodied as a single device or multiple associated devices, such as a camera and an associated computer for example. Various embodiments of the invention are described in the following portions of the detailed description.

The invention, in one embodiment is a method of using a URL (Universal Resource Locator). The method includes capturing text as a digital representation. The method also includes determining what characters are included in the digital representation. The characters form the URL. The method further includes providing the URL for use in accessing a webpage.

The invention, in an alternate embodiment, is an apparatus for capturing and using a URL. The apparatus includes a digital image capture component. The apparatus further includes a communications interface component coupled to the digital interface component. The apparatus also includes a display coupled to the communications interface component.

The invention, in another alternate embodiment, is a method of using a URL. The method includes capturing text as a digital representation. The method also includes providing the digital representation to an upstream processor. The method further includes receiving webpage data.

The invention, in yet another alternate embodiment, is a cellular telephone for capturing and using a URL. The cellular telephone includes a digital image capture component. The cellular telephone also includes a communications interface component coupled to the digital interface component. Moreover, the cellular telephone includes a display coupled to the communications interface component. Furthermore, the cellular telephone includes a controller coupled to the digital image capture component, the communications interface component and the display. Additionally, the cellular telephone includes a web rendering component coupled to the display and coupled to the communications interface component.

The invention, in still another alternate embodiment, is a method of capturing and using a URL on a personal device. The method includes capturing text on the personal device as a digital representation. The method further includes determining on the personal device what characters are included in the digital representation, the characters forming the URL. The method also includes providing the URL for use in accessing a webpage.

The invention, in another alternate embodiment, is an apparatus for using a URL. The apparatus includes means for capturing text as a digital representation. The apparatus further includes means for determining what characters are included in the digital representation, with the characters forming the URL. The apparatus also includes means for providing the URL for use in accessing a webpage.

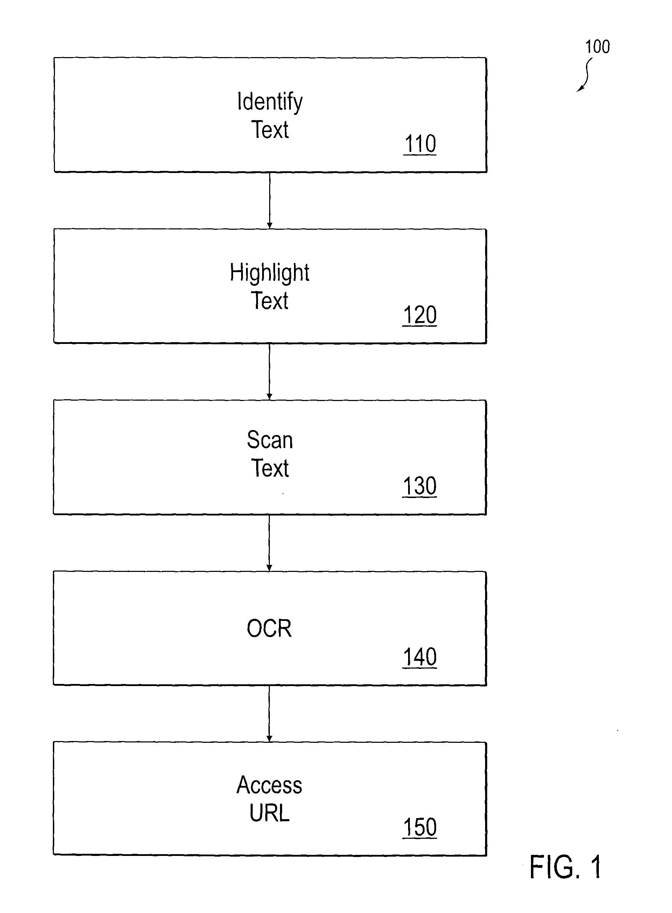

Fig. 1 illustrates an embodiment of a process of using a written URL. The process includes identifying and scanning a URL (universal resource locator or web address), determining the text of the URL, and accessing a webpage at the URL. The process 100 may be understood as a set of modules. At module 110, the text in question is identified, such as by framing text to be scanned. At module 120, the text of the URL within the text in question is identified or highlighted, thereby isolating text which makes up the URL from accompanying text. At module 130, the highlighted text is scanned, such as through a digital camera or other digital scanning device. At module 140, OCR or another text recognition method is used to determine what the text of the URL is in the scanned image. At module 150, the URL is used to access a webpage associated with the URL.

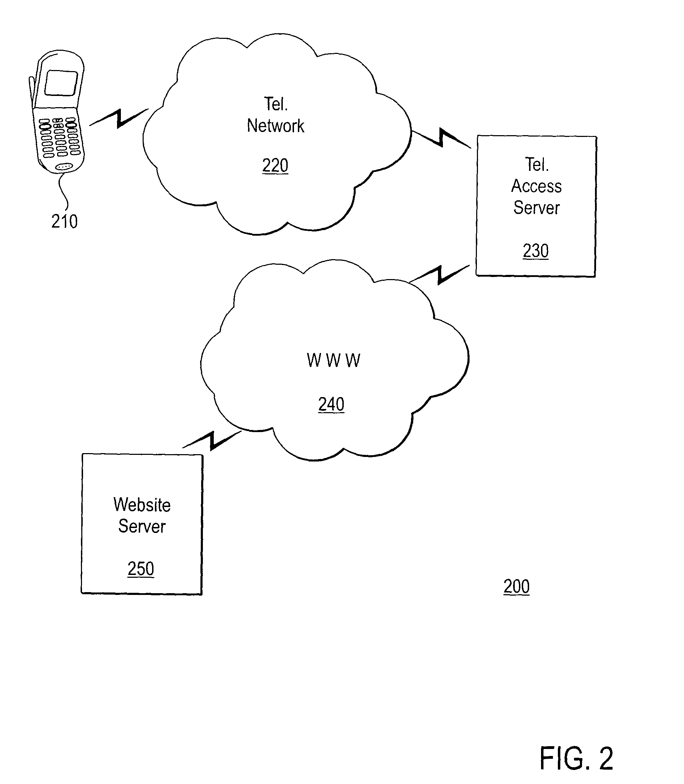

Various systems may be used to implement a method such as that illustrated in Fig. 1, or other methods of using a written or printed URL. Fig. 2 illustrates an embodiment of a system which may be used in conjunction with a written URL. The system includes a personal device coupled through a telephone network to a telephone access server, which in turn is coupled to the a network such as the Internet, thereby allowing for access to web pages. System 200 includes a personal device 210 which has a camera or other digital image capture device. Personal device 210 may be a cellular telephone, a digital camera, a scanner, or other device for example, and may be used to capture an image including a website URL.

Coupled to personal device 210 is a network 220 such as a telephone network (as used with a cellular telephone for example). Also coupled to network 220 is a telephone access server 230 which provides a bridge between network 220 and another network 240 such as the world wide web for example. Telephone access server 230 may receive an image from personal device 210 through network 220 and use OCR technology to extract a URL from the image. The URL may then be submitted to network 240 as part of a request for an associated website. Coupled to network 240 is a website server 250.

Website server 250 may receive the request including the URL from network 240 and service the request by sending the associated web page through network 240 to server 230. Server 230 may then send the web page in question to personal device 210 through network 220. Note that the OCR or similar URL extraction process may occur at the personal device 210 rather than at the telecommunications server 230.

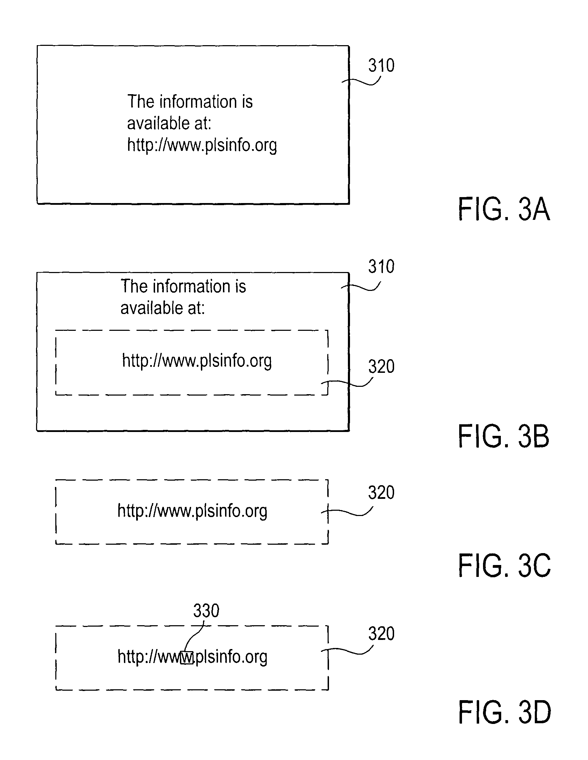

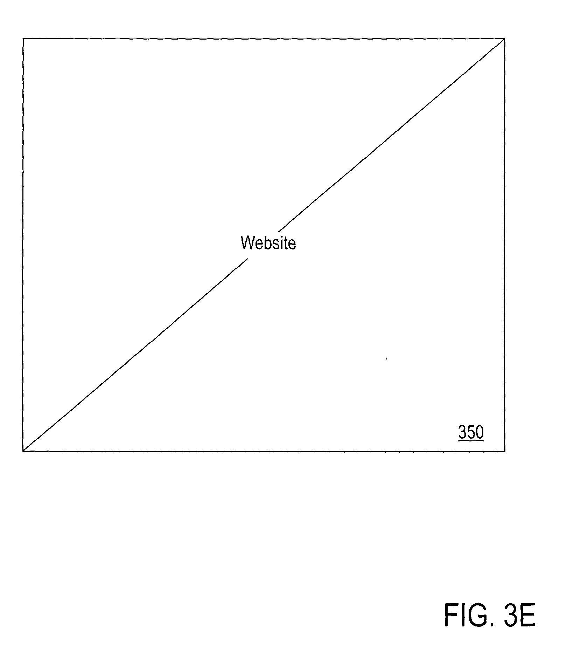

Figs. 3A, 3B, 3C, 3D, and 3E illustrate various stages in an embodiment of a process or states of an embodiment of an apparatus or system which may be used to access a web page based on a printed URL. Fig. 3A illustrates an exemplary printed URL and accompanying text. The document 310 includes a URL (http://www.plsinfo.org) and additional text. Identifying this text may be accomplished with module 110 of Fig. 1 for example.

Fig. 3B illustrates an exemplary printed URL and accompanying text with the URL highlighted. URL 320 is highlighted as may be accomplished in module 120 of Fig. 1 for example. Highlighting may be accomplished by identifying a portion of document 310 (URL 320 in the illustrated example) as the portion to be scanned, such as through framing in a viewfinder for example, or through masking for a scanner for example. Other methods of highlighting may also be apparent.

Fig. 3C illustrates an exemplary printed URL as scanned. URL 320 is scanned as highlighted or otherwise isolated. This may be accomplished, for example, using module 130 of Fig. 1. Fig. 3D illustrates an exemplary printed URL undergoing OCR. As illustrated, letter 330 of URL 320 is being recognized using OCR such as in module 140 of Fig. 1 for example.

Fig. 3E illustrates an exemplary website corresponding to the exemplary printed URL. Website 350 is displayed, either on the personal device used to scan document 310, or on a separate device, such as a predetermined or designated personal computer for example. Website 350 is the website which corresponds to URL 320 as recognized after scanning. Note that if the URL 320 is either incorrect, or incorrectly recognized, website 350 may come up in a browser either as an unexpected or incorrect website, or may be represented by an error message due to a problem finding a website.

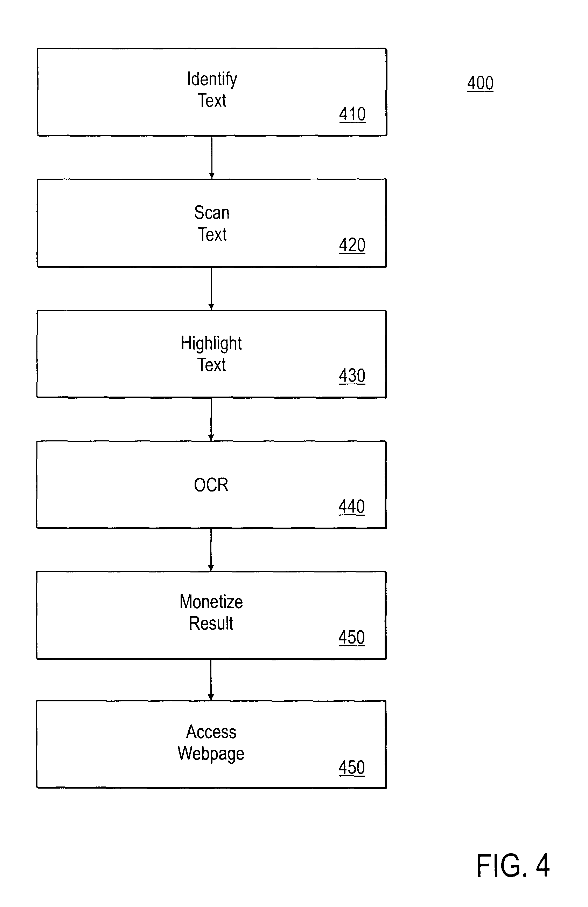

Other processes may be utilized to access a web page corresponding to a written or visually perceptible URL. Fig. 4 illustrates an alternate embodiment of a process of using a written URL. The process may include identifying text of interest, scanning the text, isolating a URL within the scanned text, extracting characters from the isolated portion of the scanned text (to extract the URL), monetizing the process to receive payment from a user, and accessing a web page associated with the URL. Process 400, as with process 100, may be understood as a series of modules which may be implemented as steps, hardware blocks, or some other combination of action and apparatus useful for producing the desired result.

In module 410, text of interest is identified, such as by framing in the lens of a personal device useful for scanning or otherwise capturing a digital image. Such a personal device may be a digital camera (either standalone or as part of an overall device such as a cellular telephone for example), a scanner, or some other device suitable for capturing a digital image. In module 420, the text identified in module 410 is scanned, such as by a personal device for example. In module 430, a portion of the scanned text or scanned digital image is highlighted or otherwise isolated. Preferably, the portion includes the URL and only the URL (no other text) to be used. In module 440, the highlighted portion of the image is processed using OCR or a similar method of determining textual content of an image to produce a URL.

In module 450, the process is monetized, meaning that some form of commercial transaction occurs, preferably resulting in collection of a fee or credit to compensate for execution of the acts involved in the method. Monetization may include receiving authorization to complete the process or authorization to charge an account for example. In module 460, the webpage corresponding to the URL produced in module 440 is accessed, and may be displayed either on a personal device or on a predetermined personal computer for example.

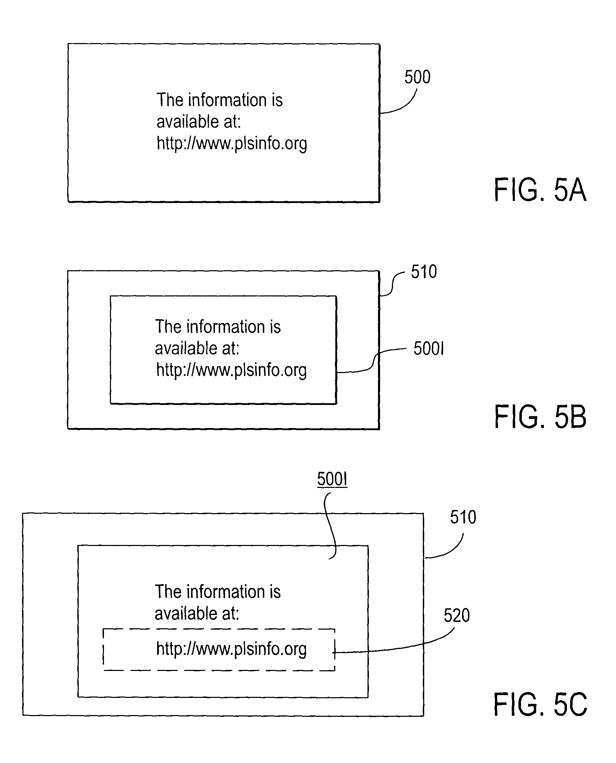

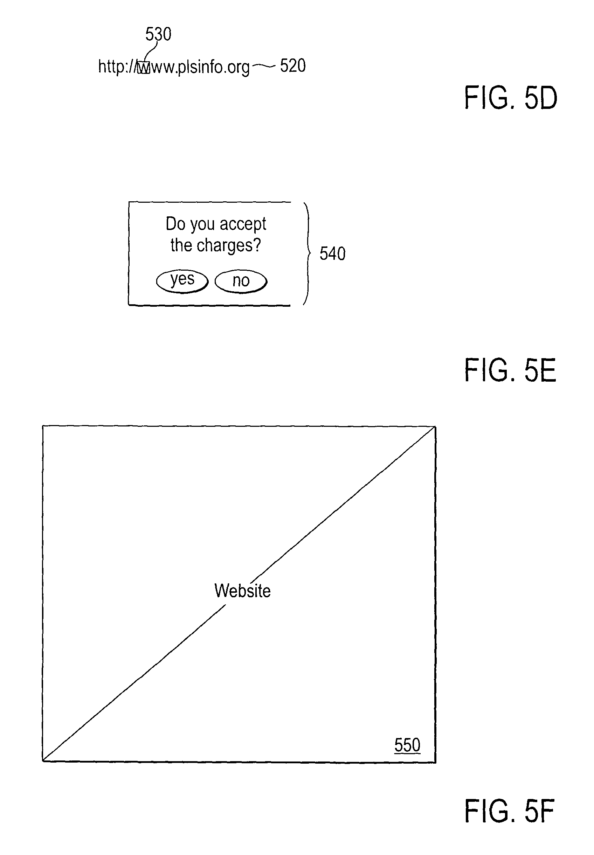

Figs. 5A, 5B, 5C, 5D, 5E and 5F illustrate various stages in an embodiment of a process or states of an embodiment of an apparatus or system which may be used to access a web page based on a printed URL. Fig. 5A illustrates an exemplary printed URL and accompanying text. The document 500 includes text such as a URL (http://www.plsinfo.org) and other text, and is in a form which allows for digital image capture. The text in question may be identified as in module 410 of method 400 for example. Fig. 5B illustrates an exemplary printed URL and accompanying text as scanned. Image 500I is an image of document 500 as scanned, and may be displayed on display 510 for evaluation and manipulation. Image 5001 may be created as a result of module 420 (scan text) of method 400 for example.

Fig. 5C illustrates an exemplary printed URL and accompanying text with the URL highlighted. URL 520 is highlighted or otherwise isolated or selected on display 510. This may result from module 430 of method 400, such as in response to a user manipulation of image 500I on a personal device or personal computer for example. Fig. 5D illustrates an exemplary printed URL undergoing OCR. Character 530 of URL 520 is recognized as part of a process such as OCR or another process suitable for translation of an image into a machine-usable or machine-readable representation of the text of the image. This may represent the activity or process of module 440 for example.

Fig. 5E illustrates a monetizing module related to use of a URL. As illustrated, a user is offered a choice of whether to execute or finalize a process in the form of a dialog box with two buttons. Other forms of a user interface may be utilized, and monetization may also be implicit in a process rather than explicit, such as through an automatic charge to a cellular telephone account for example. Thus, this may represent monetization of module 450 for example. Fig. 5F illustrates an exemplary website corresponding to the exemplary printed URL. The website corresponding to the URL is displayed, either on a personal device or on a corresponding personal computer for example. This may be triggered by the monetization of Fig. 5E, or through some other action for example.

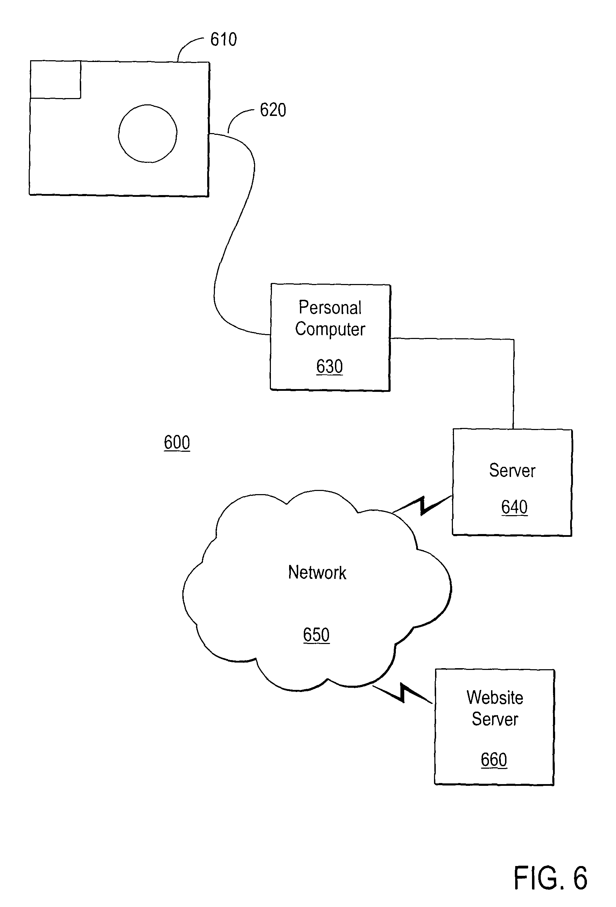

Various systems may be used to use a written or printed URL to access a web page. Fig. 6 illustrates an alternate embodiment of a system which may be used in conjunction with a written URL. The system includes a personal device, a link between the personal device and a computer, a server coupled to the computer, a network coupled to the server, and a web server also coupled to the network.

System 600 includes a personal device 610 which has a camera or other digital image capture device. As illustrated, personal device 610 is a digital camera, but personal device 210 may be a cellular telephone, a digital camera, a scanner, or other device for example, and may be used to capture an image including a website URL. Coupled to personal device 610 is a link 620 such as a cable or wireless link for example. Also coupled to link 620 is a personal computer 630 which may be used for display of a website, OCR, and communication with a network for example.

Personal computer 630 may receive an image from personal device 610 through link 620 and use OCR technology to extract a URL from the image for example. Note that the OCR or similar URL extraction process may occur at the personal device 610 rather than at the telecommunications server 630. The URL may then be submitted to server 640, through another link between server 640 and personal computer 630 for example, as part of a request for an associated website.

Coupled to server 640 is a network 650. Network 650 may be the internet or another network capable of transmitting requests for webpages. Coupled to network 650 is website server 660, which has access to the data that makes up the webpage corresponding to the URL originally from personal device 610. Network 650 may receive the request including the URL from server 640 and pass the request to server 660. Server 660 may then receive the request and service the request by sending the associated web page through network 650 and server 640 to personal computer 630. Personal computer 630 may then send the web page in question to personal device 610 through link 620 or display the webpage.

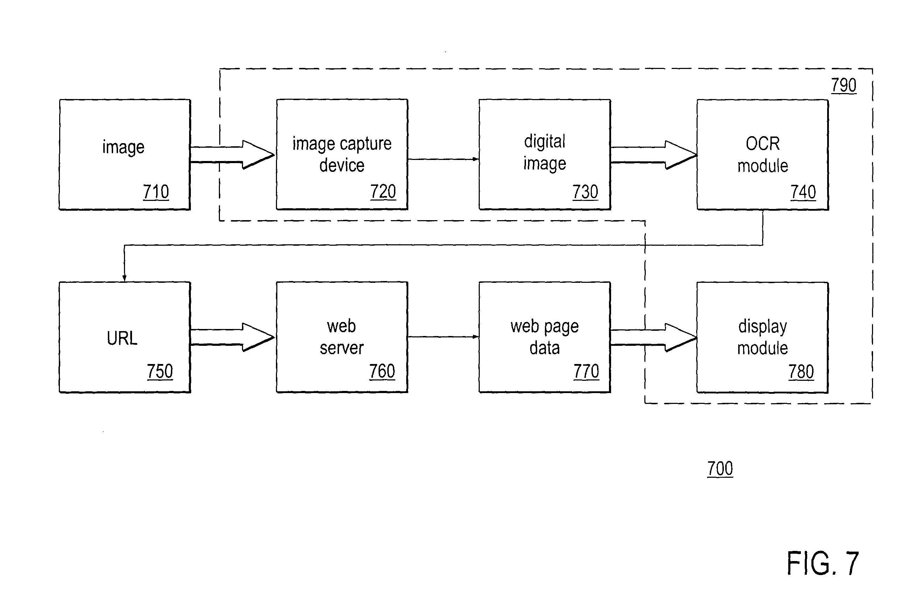

Fig. 7 illustrates yet another alternate embodiment of a system which may be used in conjunction with a written URL. The system includes modules and data which may be organized as parts of a personal device such as a cellular telephone and a computer for example, with the divisions between the devices subject to various design choices. System 700 represents the modules or components involved in recognizing a URL and providing a corresponding webpage along with the data used in a process or system.

Image 710 is an image which may be captured by image capture device or module 720, such as an optical image which includes a representation of a URL. Image capture module 720 provides a digital image 730 which is passed to OCR module 740. OCR module or component 740 processes digital image 730, or a portion thereof, and produces a URL 750. URL 750 is then passed to web server 760 as part of a request for a webpage. Web server 760 then provides webpage data 770 responsive to the request. Webpage data 770 is then rendered and displayed by display module 780. Note that as illustrated, device 790 includes image capture module 720, OCR module 740 and display module 780, such as may be present in a web-enabled cellular telephone for example.

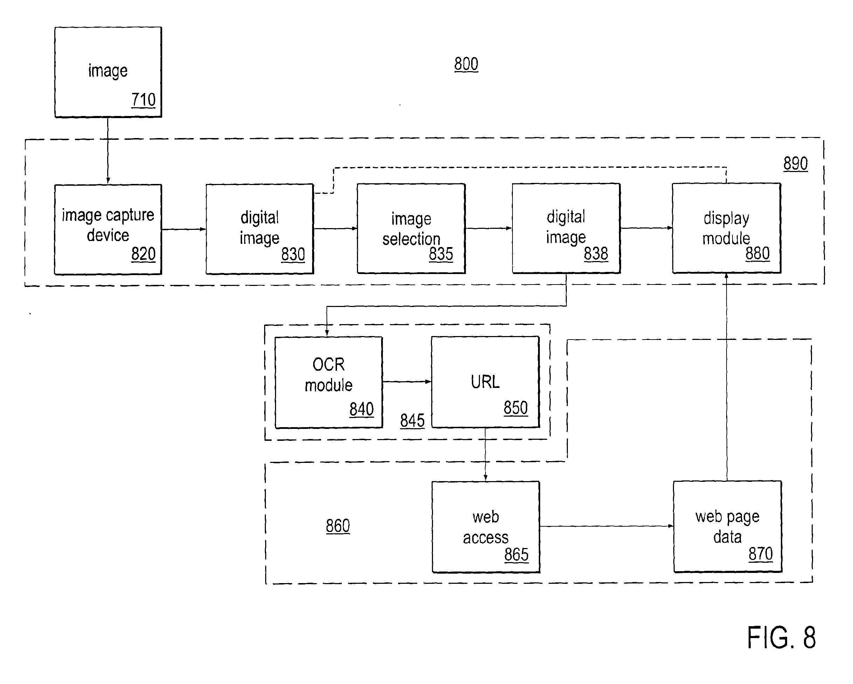

Fig. 8 illustrates still another alternate embodiment of a system which may be used in conjunction with a written URL. The system includes modules and data which may be organized as part of a personal device such as a digital camera or cellular telephone and a computer and/or server for example. The breakdown of functions or modules between the various components may be varied as appropriate based on implementation-specific details. System 800 represents another set of modules or components involved in recognizing a URL and providing a corresponding webpage along with the data used in a process or system.

Image 710 is an image which may be captured by image capture module 820, such as an optical image which includes a representation of a URL. Image capture module 820 provides a digital representation 830 which is manipulated using image selection module 835 (possibly responsive to user input) to provide a selected digital image 838 to OCR module 840. Note that image selection module 835 may work in conjunction with display module 880 to display image 830 to facilitate manipulation by a user for production of image 838. OCR module 840 processes digital image 838, and produces a URL 850. URL 850 is sent through web access 865 as part of a request for a webpage. Web page data 870 is then sent to display module 880 responsive to the request. Webpage data 870 is then rendered and displayed by display module 880.

Note that as illustrated, device 890 includes image capture module 820, image selection module 835 and display module 880, such as may be present in a web-enabled cellular telephone for example. Furthermore, note that as illustrated, module 845 includes OCR module 840, such as may be present in an OCR application of a personal computer for example. Additionally, note that device 860 includes module 845, web access 865, and links to device 890, such as may be expected in a personal computer for example.

From the foregoing, it will be appreciated that specific embodiments of the invention have been described herein for purposes of illustration, but that various modifications may be made without deviating from the spirit and scope of the invention. In some instances, reference has been made to characteristics likely to be present in various or some embodiments, but these characteristics are also not necessarily limiting on the spirit and scope of the invention. In the illustrations and description, structures have been provided which may be formed or assembled in other ways within the spirit and scope of the invention.

In particular, the separate modules of the various block diagrams represent functional modules of methods or apparatuses and are not necessarily indicative of physical or logical separations or of an order of operation inherent in the spirit and scope of the present invention. Similarly, methods have been illustrated and described as linear processes, but such methods may have operations reordered or implemented in parallel within the spirit and scope of the invention. Accordingly, the invention is not limited except as by the appended claims.

## Claims

1. A cellular telephone for capturing and using a URL (Universal Resource Locator), comprising:
a digital image capture component;
a communications interface component coupled to the digital interface component;
a display coupled to the communications interface component;
a controller coupled to the digital image capture component, the communications interface component and the display;
and
a web rendering component coupled to the display and coupled to the communications interface component.

2. The apparatus of claim 1, wherein:
the digital image capture component is a digital camera.

3. The apparatus of claim 1, further comprising:
an OCR component coupled to the digital image capture component and coupled to the communications interface component.

4. The apparatus of claim 3, wherein:
the digital image capture component is a digital camera.

5. A method of capturing and using a URL (Universal Resource Locator) on a personal device, comprising:
capturing text on the personal device as a digital representation; providing the digital representation to an upstream processor;
and
providing the URL for use in accessing a webpage.

6. The method of claim 5, wherein:
capturing text as a digital representation is accomplished by scanning the text on a personal device.

7. The method of claim 5, wherein:
capturing text as a digital representation is accomplished by digitally photographing the text on a personal device.

8. The method of claim 5, wherein:
capturing text as a digital representation is accomplished by:
scanning text as a preliminary digital representation on a personal device,
and
isolating a portion of the preliminary digital representation as the digital representation.

9. The method of claim 8, wherein:
isolating a portion of the preliminary digital representation occurs on the personal device.

10. The method of claim 8, wherein:
isolating a portion of the preliminary digital representation occurs on the upstream processor.

11. The method of claim 5, further comprising:
locating the URL on an optically perceivable medium.

12. The method of claim 5, further comprising:
determining what characters are included in the digital representation at the upstream processor, the characters forming the URL.

13. A personal device for capturing and using a URL (Universal Resource Locator), comprising:
a digital image capture component;
a communications interface component coupled to the digital interface component;
and
a display coupled to the communications interface component.

14. The apparatus of claim 13, further comprising:
a controller coupled to the digital image capture component, the communications interface component and the display.

15. The apparatus of claim 14, wherein:
the digital image capture component is a digital camera.

16. The apparatus of claim 15, wherein:
the apparatus is a web-enabled personal communication device.

17. The apparatus of claim 15, wherein:
the apparatus is a web-enabled personal device.

18. The apparatus of claim 13, further comprising:
an OCR component coupled to the digital image capture component and coupled to the communications interface component.

19. The apparatus of claim 13, further comprising:
a web rendering component coupled to the display and coupled to the communications interface component.

20. The apparatus of claim 13, further comprising:
means for accessing a webpage at the URL.
